# FASCICULE DE BREVET EUROPEEN

(11) **EP 2 542 428 B1**
(45) Date de publication et mention de la délivrance du brevet: **13.05.2015**
(21) Numéro de dépôt: 11706255.4
(22) Date de dépôt: 03.03.2011
(51) Int. Cl.: B60C 9/08, B60C 11/00, B60C 11/18, B60C 9/22

(54) **PNEUMATIQUE POUR VEHICULES COMPORTANT UNE BANDE DE ROULEMENT CONSTITUEE DE PLUSIEURS MELANGES ET UNE ARMATURE DE CARCASSE FORMEE D'AU MOINS DEUX COUCHES.**
FAHRZEUGREIFEN MIT PROFIL AUS MEHREREN VERBINDUNGEN UND KARKASSENVERSTÄRKUNG AUS MINDESTENS ZWEI SCHICHTEN
VEHICLE TIRE COMPRISING A TREAD CONSISTING OF A PLURALITY OF COMPOUNDS AND A CARCASS REINFORCEMENT CONSISTING OF AT LEAST TWO LAYERS

(30) Priorité: 28.05.2010 US 349374 P; 05.03.2010 FR 1051609
(43) Date de publication de la demande: 09.01.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BESTGEN, Luc, F-63140 Chatel-guyon (FR); PROST, Pascal, F-63200 Riom (FR); VALLE, Alain, F-63118 Cebazat (FR); RUFFENACH, Jean-Marc, F-63118 Cebazat (FR)
(74) Mandataire: Le Cam, Stéphane Georges Elie
(86) Numéro de dépôt international: PCT/EP2011/053185
(87) Numéro de publication internationale: WO 2011/107543

(56) Documents cités:
- EP-A1- 0 950 546
- EP-A1- 1 800 906

## Description

L'invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un pneumatique de motocyclette, ou moto.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Le document EP 1 800 906 décrit ainsi un pneumatique pour motocyclette comportant une armature de carcasse radiale et dont la bande de roulement est constituée de différents mélanges caoutchouteux répartis selon la direction axiale.

L'invention a pour but de fournir un pneumatique pour véhicule motorisé à deux roues permettant d'améliorer les propriétés d'usure et d'adhérence de la bande de roulement dudit pneumatique.

Ce but a été atteint selon l'invention par un pneumatique comprenant les caractéristique de la revendication indépendante 1.

La direction longitudinale du pneumatique, ou direction circonférentielle, est la direction correspondant à la périphérie du pneumatique et définie par la direction de roulement du pneumatique.

La direction transversale ou axiale du pneumatique est parallèle à l'axe de rotation du pneumatique.

L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement et donc dans la partie centrale de la bande de roulement.

Un plan radial ou méridien contient l'axe de rotation du pneumatique.

La direction radiale est une direction coupant l'axe de rotation du pneumatique et perpendiculaire à celui-ci. La direction radiale est l'intersection entre un plan circonférentiel et un plan radial.

La largeur axiale d'une zone constituée du deuxième mélange polymérique est mesurée sur un profil méridien selon la direction axiale entre les extrémités de ladite zone, lorsque le pneumatique est monté sur sa jante de service et gonflé à sa pression recommandée.

La distance entre les éléments de renforcement de chacune desdites au moins deux couches formant la structure de renfort de type carcasse est mesurée d'élément de renforcement à élément de renforcement, c'est-à-dire entre l'élément de renforcement d'une première couche et l'élément de renforcement d'une seconde couche de la structure de renfort de type carcasse. En d'autres termes, cette distance englobe les épaisseurs respectives des mélanges caoutchouteux de calandrage de chacune des nappes compris entre lesdits câbles.

Cette distance est mesurée entre deux éléments de renforcement de chacune des couches selon la projection orthogonale d'un point de l'abscisse curviligne radialement extérieure de la couche d'éléments de renforcement radialement intérieure sur l'abscisse curviligne radialement intérieure de la couche d'éléments de renforcement radialement extérieure. Dans un plan méridien, les abscisses curvilignes radialement intérieure et extérieure d'une couche d'éléments de renforcement de la structure de renfort de type carcasse sont définies par l'ensemble des éléments de renforcement d'une même couche.

La bande de roulement du pneumatique selon l'invention est donc constituée au moins en surface d'une partie ou bande circonférentielle centrale constituée d'un premier mélange polymérique et d'au moins deux parties ou bandes latérales d'un autre mélange polymérique. Les bandes latérales sont avantageusement identiques pour réaliser un pneumatique symétrique mais peuvent selon certaines réalisations être constituées de mélanges différents. La partie ou bande circonférentielle centrale s'étend axialement, conformément à l'invention, sur une zone comprenant le plan équatorial.

Selon un mode de réalisation avantageux de l'invention, afin de conférer des propriétés symétriques au pneumatique, la bande circonférentielle centrale est avantageusement centrée sur le plan équatorial. Selon d'autres modes de réalisations, destinés par exemple à des pneumatiques devant rouler sur un circuit comportant des virages essentiellement dans la même direction, la bande circonférentielle centrale peut ne pas être centrée sur le plan équatorial.

Selon un mode de réalisation préféré de l'invention, le deuxième mélange polymérique est d'une composition différente de celle du premier mélange polymérique et de préférence encore, le deuxième mélange polymérique présente des propriétés d'adhérence supérieures à celles dudit premier mélange polymérique.

Selon d'autres modes de réalisations, des propriétés différentes peuvent être obtenues avec des mélanges identiques par des conditions de vulcanisation différentes.

Selon l'invention, le deuxième mélange polymérique présente une dureté Shore A différente de celle du premier mélange polymérique.

La dureté Shore A des mélanges polymériques après cuisson est appréciée conformément à la norme ASTM D 2240-86.

D'autres propriétés du deuxième mélange polymérique peuvent être différentes. Il peut par exemple s'agir de la couleur qui peut apporter un effet fonctionnel et/ou esthétique.

En outre, selon l'invention, les éléments de renforcements desdites au moins deux couches formant la structure de renfort de type carcasse forment avec la direction circonférentielle des angles compris entre 70 et 85° et la distance radiale entre les éléments de renforcement de chacune desdites au moins deux couches formant la structure de renfort de type carcasse est au plus égale à 0.5 mm sur au moins 60 % de la largeur axiale d'au moins une zone constituée du deuxième mélange polymérique.

Un pneumatique ainsi réalisé selon l'invention permet d'améliorer les performances en termes notamment d'usure et d'adhérence du fait notamment des choix faits concernant les mélanges polymériques constituants la bande de roulement. En outre, le choix des angles formés par les éléments de renforcement desdites au moins deux couches formant la structure de renfort de type carcasse améliore également les propriétés d'adhérence dans les zones de la bande de roulement correspondant au deuxième mélange polymérique. La distance entre les éléments de renforcement de chacune desdites au moins deux couches formant la structure de renfort de type carcasse au plus égale à 0.5 mm sur au moins 60 % de la largeur axiale d'au moins une zone constituée du deuxième mélange polymérique contribue encore à améliorer les propriétés d'adhérence dans les zones de la bande de roulement correspondant au deuxième mélange polymérique.

Par ailleurs, la distance entre les éléments de renforcement de chacune desdites au moins deux couches formant la structure de renfort de type carcasse au plus égale à 0.5 mm est avantageusement obtenue avec deux couches comportant des épaisseurs de calandrage différentes. Dans le cas d'un pneumatique comportant deux couches formant la structure de renfort de type carcasse de longueurs différentes, la couche la plus longue comporte avantageusement les épaisseurs de calandrage les moins importantes, ce qui peut conduire à un allègement du pneumatique. Un tel allègement du pneumatique peut encore conduire à une amélioration des performances du pneumatique notamment en termes d'agrément de pilotage et de résistance au roulement.

De préférence selon l'invention, la distance entre les éléments de renforcement de chacune desdites au moins deux couches formant la structure de renfort de type carcasse est supérieure à 0.2 mm sur au moins 60 % de la largeur axiale d'au moins une zone constituée du deuxième mélange polymérique.

Pour des valeurs de distances entre les éléments de renforcement inférieures à 0.2 mm, le confort de pilotage du véhicule peut se trouver dégrader du fait de la diminution des déplacements relatifs des éléments de renforcement croisés de chacune des couches de la structure de carcasse.

Une variante avantageuse de l'invention prévoit que la densité d'éléments de renforcement de la couche d'armature de carcasse radialement intérieure est inférieure à la densité d'éléments de renforcement de la couche d'armature de carcasse radialement la plus à l'extérieur. Avantageusement encore selon l'invention il est prévu un gradient croissant de la densité d'éléments de renforcement d'une couche à la suivante depuis la couche radialement la plus à l'intérieur.

Comme expliqué précédemment, la largeur axiale de la bande de roulement est mesurée sur un profil méridien selon la direction axiale entre les extrémités de la bande de roulement, lorsque le pneumatique est monté sur sa jante de service et gonflé à sa pression recommandée.

Selon l'invention, le pneumatique étant destiné à équiper la roue avant du véhicule, la zone de la surface de la bande de roulement constituée du premier mélange polymérique présente une largeur axiale comprise entre 45 et 70 % de la largeur axiale de la bande de roulement.

Un pneumatique destiné à équiper la roue avant d'une motocyclette est moins sensible à l'usure centre que celui destiné à équiper la roue arrière. Le pneumatique ainsi proposé selon ce deuxième mode de réalisation comporte avantageusement une bande de roulement constituée de mélange polymériques dont les performances relatives à l'usure sont moins élevées que celles des mélanges du pneumatique destiné à équiper la roue arrière. La partie centrale de la bande de roulement est ainsi relativement large et les parties latérales sont avantageusement constituées d'un mélange polymérique dont les performances en adhérence sont élevées.

A titre d'exemple, le mélange polymérique de la partie centrale du pneumatique destiné à équiper la roue avant présente des propriétés sensiblement équivalentes à celles du mélange polymérique constituant les parties latérales du pneumatique destiné à équiper la roue arrière.

Une variante de réalisation avantageuse de l'invention prévoit que la structure de renforcement de sommet comporte au moins une couche d'éléments de renforcement circonférentiels.

De préférence encore, les éléments de renforcement de la couche d'éléments de renforcement circonférentiels présentent un module d'élasticité supérieur à 6000 N/mm².

De préférence également, les éléments de renforcement de la couche d'éléments de renforcement circonférentiels sont métalliques et/ou textiles et/ou en verre.

Selon une variante de l'invention, la structure de renforcement de sommet comporte au moins deux couches d'éléments de renforcement et d'une couche à la suivante les tronçons forment entre eux des angles compris entre 20 et 160°.

Selon une réalisation préférée de l'invention, les éléments de renforcement des couches de travail sont en matériau textile.

Selon un autre mode de réalisation de l'invention, les éléments de renforcement des couches de travail sont en métal.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique qui ne correspond pas à l'invention,
- figure 2, une vue partielle agrandie d'une partie du schéma de la figure 1,
- figure 3, une vue méridienne d'un schéma d'un pneumatique selon l'invention.

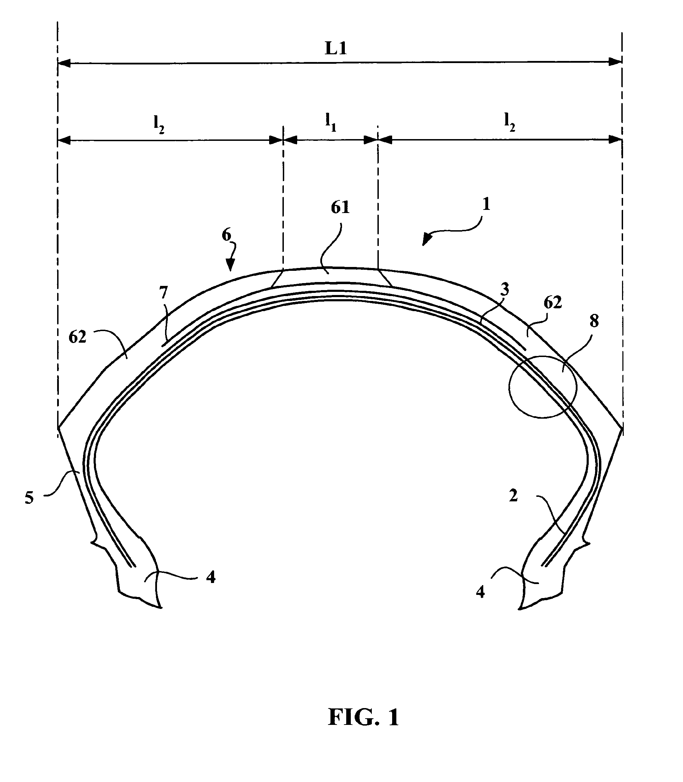

Les figures 1 à 3 ne sont pas représentées à l'échelle pour en simplifier la compréhension.

La figure 1, qui sert à comprendre l'invention, représente un pneumatique 1 de type 190/50 ZR 17 destiné à équiper la roue arrière d'une motocyclette comprenant une armature de carcasse constituée de deux couches 2, 3 comprenant des éléments de renforcement de type textile et plus précisément en polyamide aliphatique 140 tex / 2. Les couches 2, 3 de l'armature de carcasse sont constituées d'éléments de renforcement formant un angle avec la direction longitudinale du pneumatique dans le plan équatorial égal à 80° et croisés d'une couche à la suivante.

Les couches 2, 3 de l'armature de carcasse sont ancrées de chaque côté du pneumatique 1 dans un bourrelet 4 dont la base est destinée à être montée sur un siège de jante. Chaque bourrelet 4 est prolongé radialement vers l'extérieur par un flanc 5, ledit flanc 5 rejoignant radialement vers l'extérieur la bande de roulement 6.

Le pneumatique 1 comporte encore une armature de sommet constituée de d'une couche 7 d'éléments de renforcement circonférentiels en matériau textile et plus précisément en polyamide aromatique 167 tex / 2.

La couche d'éléments de renforcement circonférentiels 7 est avantageusement constituée d'un seul fil enroulé pour former un angle avec la direction longitudinale sensiblement égal à 0°. La couche d'éléments de renforcement circonférentiels 7 peut encore être réalisée par l'enroulement simultané de plusieurs fils nus ou sous forme de bandelettes lorsqu'ils sont noyés dans du caoutchouc.

La bande de roulement 6 est constituée, conformément à l'invention, d'un premier mélange de caoutchouc 61 dans sa partie centrale et d'un deuxième mélange de caoutchouc 62 dans les parties latérales. Les jonctions entre les parties 61 et 62 formant la bande de roulement 6 sont avantageusement réalisées de manière progressive avec une interface en biseau, l'angle du biseau étant compris entre 20 et 60° par rapport au à la surface extérieure de la bande de roulement 6 du pneumatique 1.

Le mélange de caoutchouc 62 est avantageusement choisi de sorte que ses propriétés d'adhérence sont supérieures à celles du mélange de caoutchouc 61, ledit mélange de caoutchouc 61 étant plus particulièrement choisi pour sa résistance à l'usure. La bande de roulement ainsi réalisé peut permettre de définir un compromis résistance à l'usure / adhérence favorable par rapport à ce qu'il est possible d'obtenir avec un seul mélange de caoutchouc.

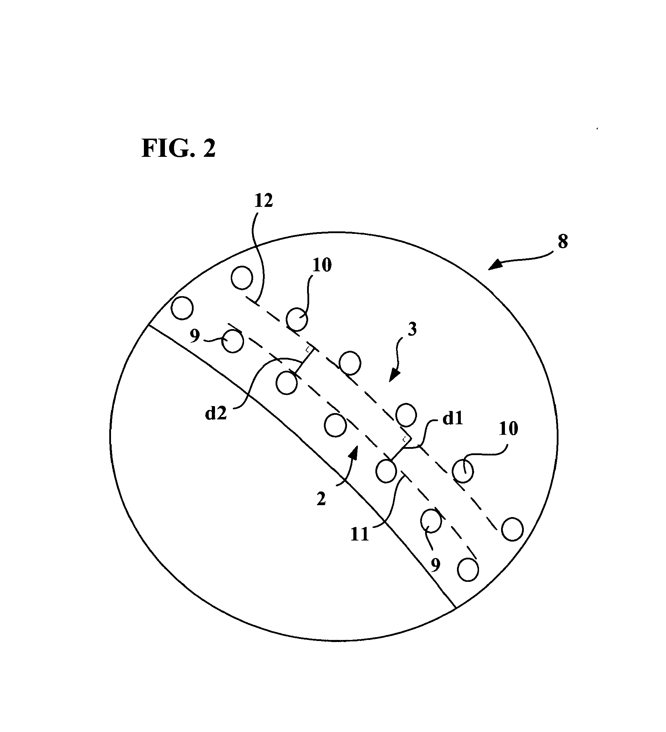

La figure 2 illustre un agrandissement de la zone 8 et indique la distance séparant les deux couches de l'armature de carcasse 2, 3 dans une zone correspondant au mélange de caoutchouc 62.

La couche d'armature de carcasse 2 est constituée d'éléments de renforcement 9 et la couche d'armature de carcasse 3 est constituée d'éléments de renforcement 10.

La distance entre les éléments de renforcement 9 et 10 de chacune des couches 2, 3 est mesurée d'élément de renforcement 9 à élément de renforcement 10 selon la projection orthogonale d'un point de l'abscisse curviligne radialement extérieure 11 de la couche 2 d'éléments de renforcement 9 sur l'abscisse curviligne radialement intérieure 12 de la couche 3 d'éléments de renforcement 10.

Les distances d1 et d2 représentées sur la figure 2 sont égales à 0.4 mm. Conformément à l'invention cette distance est comprise entre 0.2 et 0.5 mm sur au moins 60 % de la largeur axiale de la zone correspondant au mélange de caoutchouc 62.

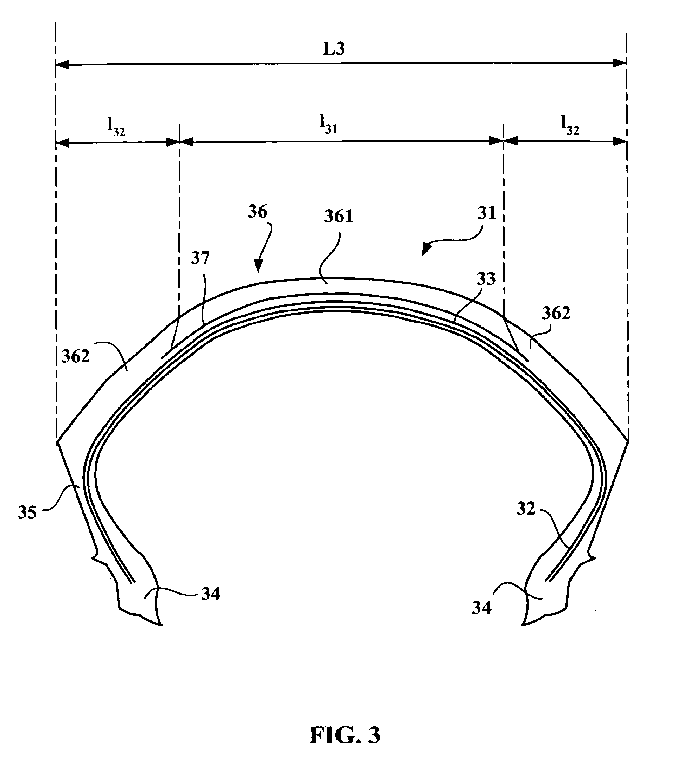

Sur la figure 3, est représenté un pneumatique 31 de type 120/70 ZR 17 destiné à équiper la roue avant d'une motocyclette. Ce pneumatique 31 est semblable à celui de la figure 1 et en diffère d'une part par des angles des éléments de renforcement des couches de l'armature de carcasse dans le plan équatorial égaux à 72°.

Le pneumatique 31 diffère encore de celui de la figure 1 par les largeurs axiales des zones centrale et latérales correspondant respectivement aux mélanges de caoutchouc 361 et 362.

La largeur axiale l₃₁ de la partie centrale correspondant au mélange de caoutchouc 361 est égale à 73.6 mm et représente environ 61 % de la largeur axiale L3 de la bande de roulement égale à 120 mm.

Les largeurs axiales l₃₂ de chacune des parties latérales correspondant au mélange de caoutchouc 362 sont identiques et égales à 23.2 mm et représentent environ 19 % de la largeur axiale L3 de la bande de roulement.

L'invention ne doit pas être comprise comme étant limitée à la description des exemples ci-dessus et s'étend notamment à des pneumatiques pouvant comporter des armatures de carcasse ou de sommet plus complexes comportant par exemple trois, ou plus, couches de travail d'éléments de renforcement faisant un angle avec la direction circonférentielle.

## Revendications

1. Pneumatique (1) pour véhicule motorisé à deux roues, le pneumatique étant destiné à équiper la roue avant du véhicule, comportant une structure de renfort de type carcasse, formée d'au moins deux couches (2, 3) d'éléments de renforcement, ancrée de chaque côté du pneumatique à un bourrelet (4) dont la base est destinée à être montée sur un siège de jante, chaque bourrelet se prolongeant radialement vers l'extérieur par un flanc (5), les flancs rejoignant radialement vers l'extérieur une bande de roulement (6), et comportant sous la bande de roulement une structure de renforcement de sommet constituée d'au moins une couche d'éléments de renforcement, au moins la surface de la bande de roulement étant constituée d'un premier mélange polymérique (61) s'étendant au moins dans la zone du plan équatorial et d'au moins un deuxième mélange polymérique (62) présentant des propriétés physico-chimique différentes de celles dudit premier mélange polymérique, les éléments de renforcements (9, 10) desdites au moins deux couches (2, 3) formant la structure de renfort de type carcasse formant avec la direction circonférentielle des angles compris entre 70 et 85°, **caractérisé en ce que** la distance (d1, d2) entre les éléments de renforcement (9, 10) de chacune desdites au moins deux couches (2, 3) formant la structure de renfort de type carcasse est au plus égale à 0.5 mm sur au moins 60 % de la largeur axiale d'au moins une zone constituée du deuxième mélange polymérique (62), **en ce que** la distance (d1, d2) entre les éléments de renforcement (9, 10) de chacune desdites au moins deux couches (2, 3) formant la structure de renfort de type carcasse est supérieure à 0.2 mm sur au moins 60 % de la largeur axiale d'au moins une zone constituée du deuxième mélange polymérique (62) et **en ce que** la zone de la surface de la bande de roulement (6) constituée du premier mélange polymérique (61) présente une largeur axiale comprise entre 45 et 70 % de la largeur axiale de la bande de roulement (6).

2. Pneumatique (1) selon la revendication 1, **caractérisé en ce que** le deuxième mélange polymérique (62) est d'une composition différente de celle du premier mélange polymérique (61).

3. Pneumatique (1) selon l'une des revendications 1 ou 2, **caractérisé en ce que** le deuxième mélange polymérique (62) présente des propriétés d'adhérence supérieures à celles dudit premier mélange polymérique (61).

4. Pneumatique (1) selon l'une des revendications 1 à 3, **caractérisé en ce que** le deuxième mélange polymérique (62) présente une dureté Shore A inférieure à celle du premier mélange polymérique (61).

5. Pneumatique (1) selon l'une des revendications précédentes, **caractérisé en ce que** la structure de renforcement de sommet comporte au moins une couche (7) d'éléments de renforcement circonférentiels.

6. Pneumatique (1) selon l'une des revendications précédentes, **caractérisé en ce que** la structure de renforcement de sommet comporte au moins deux couches d'éléments de renforcement et **en ce que** d'une couche à la suivante les tronçons forment entre eux des angles compris entre 20 et 160°.

7. Utilisation d'un pneumatique (1) tel que décrit selon l'une des revendications 1 à 6 pour un véhicule motorisé à deux roues tel qu'une motocyclette.

## Patentansprüche

1. Luftreifen (1) für ein zweirädriges Motorfahrzeug, wobei der Luftreifen zur Ausrüstung des Vorderrads des Fahrzeugs bestimmt ist, der eine Verstärkungsstruktur von der Art Karkasse aufweist, die von mindestens zwei Schichten (2, 3) von Verstärkungselementen gebildet wird, die auf jeder Seite des Luftreifens an einem Wulst (4) verankert ist, dessen Basis dazu bestimmt ist, auf einen Felgensitz montiert zu werden, wobei jeder Wulst sich radial nach außen durch eine Flanke (5) verlängert, wobei die Flanken radial nach außen an einen Laufstreifen (6) anschließen, und der unter dem Laufstreifen eine Scheitelverstärkungsstruktur aufweist, die aus mindestens einer Schicht von Verstärkungselementen gebildet wird, wobei mindestens die Fläche des Laufstreifens aus einer ersten Polymermischung (61), die sich mindestens in der Zone der Äquatorialebene erstreckt, und mindestens einer zweiten Polymermischung (62) besteht, die andere physikalisch-chemische Eigenschaften aufweist als die erste Polymermischung, wobei die Verstärkungselemente (9, 10) der mindestens zwei Schichten (2, 3), die die Verstärkungsstruktur von der Art Karkasse bilden, mit der Umfangsrichtung Winkel zwischen 70 und 85° bilden, **dadurch gekennzeichnet, dass** der Abstand (d1, d2) zwischen den Verstärkungselementen (9, 10) jeder der mindestens zwei die Verstärkungsstruktur von der Art Karkasse bildenden Schichten (2, 3) höchstens gleich 0,5 mm über mindestens 60% der axialen Breite mindestens einer aus der zweiten Polymermischung (62) bestehenden Zone ist, dass der Abstand (d1, d2) zwischen den Verstärkungselementen (9, 10) jeder der die Verstärkungsstruktur von der Art Karkasse bildenden mindestens zwei Schichten (2, 3) größer als 0,2 mm über mindestens 60% der axialen Breite mindestens einer aus der zweiten Polymermischung (62) bestehenden Zone ist, und dass die aus der ersten Polymermischung (61) bestehende Zone der Fläche des Laufstreifens (6) eine axiale Breite zwischen 45 und 70% der axialen Breite des Laufstreifens (6) darstellt.

2. Luftreifen (1) nach Anspruch 1, **dadurch gekennzeichnet, dass** die zweite Polymermischung (62) eine andere Zusammensetzung hat als die erste Polymermischung (61).

3. Luftreifen (1) nach einem der Ansprüche 1 oder 2, **dadurch gekennzeichnet, dass** die zweite Polymermischung (62) höhere Haftungseigenschaften aufweist als die erste Polymermischung(61).

4. Luftreifen (1) nach einem der Ansprüche 1 bis 3, **dadurch gekennzeichnet, dass** die zweite Polymermischung (62) eine geringere Shore-A-Härte als die erste Polymermischung (61) aufweist.

5. Luftreifen (1) nach einem der vorhergehenden Ansprüche, **dadurch gekennzeichnet, dass** die Scheitelverstärkungsstruktur mindestens eine Schicht (7) von Umfangsverstärkungselementen aufweist.

6. Luftreifen (1) nach einem der vorhergehenden Ansprüche, **dadurch gekennzeichnet, dass** die Scheitelverstärkungsstruktur mindestens zwei Schichten von Verstärkungselementen aufweist, und dass die Abschnitte von einer Schicht zur anderen miteinander Winkel zwischen 20 und 160° bilden.

7. Verwendung eines Luftreifens (1) nach einem der Ansprüche 1 bis 6 für ein zweirädriges Motorfahrzeug wie ein Motorrad.

## Claims

1. Tyre (1) for motorized two-wheeled vehicle, comprising a carcass-type reinforcing structure formed of at least two layers (2, 3) of reinforcing elements and anchored on each side of the tyre to a bead (4) whose base is intended to be mounted on a wheel rim seat, each bead being continued radially outwardly by a sidewall (5), the sidewalls being joined radially outwardly to a tread (6), and comprising underneath the tread a crown reinforcement structure consisting of at least one layer of reinforcing elements, at least the tread surface consists of a first polymeric compound (61) extending in at least the region of the equatorial plane and at least one second polymeric compound (62) having physicochemical properties different from those of said first polymeric compound, the reinforcing elements (9, 10) of said two or more layers (2, 3) forming the carcass-type reinforcing structure form angles with the circumferential direction of between 70° and 85°, **characterized in that** the distance (d1, d2) between the reinforcing elements (9, 10) of each of said two or more layers (2, 3) forming the carcass-type reinforcing structure is not more than 0.5 mm across at least 60% of the axial width of at least one region composed of the second polymeric compound (62), **in that** the distance (d1, d2) between the reinforcing elements (9, 10) of each of said two or more layers (2, 3) forming the carcass-type reinforcing structure is more than 0.2 mm across at least 60% of the axial width of at least one region composed of the second polymeric compound (62), and **in that** the region of the tread surface formed by the first polymeric compound (61) has an axial width of between 45 and 70 % of the axial width of the tread (6).

2. Tyre (1) according to Claim 1, **characterized in that** the second polymeric compound (62) is of a different composition from that of the first polymeric compound (61).

3. Tyre (1) according to either of Claims 1 or 2, **characterized in that** the second polymeric compound (62) has grip properties superior to those of said first polymeric compound (61).

4. Tyre (1) according to one of Claims 1 to 3, **characterized in that** the second polymeric compound (62) has a Shore A hardness less than that of the first polymeric compound (61).

5. Tyre (1) according to one of the preceding claims, **characterized in that** the crown reinforcement structure comprises at least one layer (7) of circumferential reinforcing elements.

6. Tyre (1) according to one of the preceding claims, **characterized in that** the crown reinforcement structure comprises at least two layers of reinforcing elements and **in that** from one layer to the next the sections form angles with each other of between 20° and 160°.

7. Use of a tyre (1) as described in accordance with one of Claims 1 to 6 for a motorized two-wheeled vehicle such as a motorcycle.
